# EUROPEAN PATENT APPLICATION

(11) **EP 4 368 426 A1**
(43) Date of publication of application: **15.05.2024**
(21) Application number: 23209519.0
(22) Date of filing: 13.11.2023
(51) Int. Cl.: B60J 5/06

(54) **TENSIONING SYSTEM FOR A TARPAULIN**

(30) Priority: 14.11.2022 BE 202205916
(71) Applicant: Versus-Omega BV, 3660 Oudsbergen (BE)
(72) Inventor: Derks, Reinier Johannes, Grubbenvorst (NL); Derks, Johannes Reinier, Venlo (NL)
(74) Representative: Arnold & Siedsma

(57) **Abstract**

Tensioning system for a tarpaulin (102) which defines a side wall (101a, 101b)of a loading space (101), wherein the tarpaulin extends along at least one vertical bearing element (103) of the loading space. The tensioning system comprises at least one tensionable pulling element (110) which extends over substantially the whole length of the side wall (101a, 101b) along an inner side of the tarpaulin (102). The tensioning system further comprises at least one redirecting device (120) which is configured to redirect the at least one tensionable pulling element (110) such that, at the position of the at least one vertical bearing element (103), the at least one tensionable pulling element (110) passes between the at least one vertical bearing element (103) and the tarpaulin (102). When the at least one tensionable pulling element (110) is tensioned, the tensioning system exerts a negative pre-tension on the tarpaulin (102).

## Description

### Field of the invention

The present invention relates to a tensioning system for a tarpaulin which defines a side wall of a loading space, more specifically a tensioning system for a tarpaulin which defines a side wall of a mobile loading space for transporting bulk goods or stackable goods. The invention also relates to a trailer for a truck which is provided with such a tensioning system and to a freight car for a train which is provided with such a tensioning system. The invention further relates to a redirecting device for use in such a tensioning system.

### Background

Transporting bulk goods or stackable goods in a loading space, for instance tyre transport, is challenging in several ways. In the case of transport by public road the maximum legally permissible vehicle width must for instance be taken into consideration. This is not self-evident when stackable goods can move in a loading space. When the goods are set into motion due to circumstances, they may exert a pressure on the often flexible side walls of the loading space, this causing bulging of the loading space. Such bulging in turn increases the vehicle width, which entails safety risks and must therefore be avoided.

Known systems which are applied to prevent bulging of the loading space make use of additional elements such as slats, rungs, straps or profiles in order to reinforce the side walls of the loading space. These systems however have the drawback that they are labour-intensive and time-consuming to install (and remove afterwards) and/or that they require further modifications to the loading space, preventing loading and unloading of the loading space from taking place efficiently.

### Summary of the invention

Embodiments of the invention have the object of providing a tensioning system for a flexible side wall, such as a tarpaulin, of a loading space, wherein the tensioning system prevents bulging of the side wall during transport and wherein one or more of the above stated drawbacks are obviated. More specifically, it is an object of embodiments of the invention to provide a tensioning system which can be applied in a loading space in efficient manner, whereby less time and/or manpower is necessary to install/remove the tensioning system, and/or wherein fewer modifications to the tarpaulin or the loading space are necessary. It is a further object of embodiments of the invention to provide a tensioning system which does not impede the loading and unloading of the loading space, or hardly so.

An aspect of the invention relates to a tensioning system for a tarpaulin which defines a side wall of a loading space, wherein the tarpaulin extends along at least one vertical bearing element of the loading space. The tensioning system comprises at least one tensionable pulling element which extends over substantially the whole length of the side wall along an inner side of the tarpaulin. The tensioning system further comprises at least one redirecting device which is configured to redirect the at least one tensionable pulling element such that, at the position of the at least one vertical bearing element, the at least one tensionable pulling element passes between the at least one vertical bearing element and the tarpaulin. When the at least one tensionable pulling element is tensioned, the tensioning system exerts a negative pre-tension on the tarpaulin.

Exerting a negative pre-tension on the tarpaulin is understood to mean that the tarpaulin is flexed or stretched inward, i.e. in the direction of the inner space of the loading space. Providing this negative pre-tension makes the tarpaulin better able to withstand possible pressure from within, for instance due to goods pushing or moving, and prevents outward bulging of the tarpaulin. Because the at least one tensionable pulling element extends on one hand over substantially the whole length of the side wall along the inner side of the tarpaulin and on the other hand is redirected by the at least one redirecting device to pass between the at least one vertical bearing element and the tarpaulin, i.e. along the outer side of the vertical bearing element, the negative pre-tension can be achieved in an efficient manner. This is because this configuration of the at least one tensionable pulling element ensures that the pulling or tensioning forces when tensioning do not run in a straight line owing to the redirection provided, whereby a relatively great negative tension can be obtained with a relatively low strain on the elements in question. The tensioning system additionally has the advantage that, since the at least one tensionable pulling element passes between the at least one vertical bearing element and the tarpaulin, the at least one tensionable pulling element can be manipulated from the outside without access to the loading space being required here.

The at least one tensionable pulling element preferably extends in a straight line over substantially the whole length of the side wall, except in the vicinity of the at least one vertical bearing element. This configuration of the at least one tensionable pulling element emphasizes that providing the described redirection causes the pulling or tensioning forces when tensioning not to run in a straight line, whereby a relatively great negative tension can be obtained with a relatively low strain on the elements in question.

The at least one redirecting device is preferably configured to redirect the at least one tensionable pulling element such that, coming up to the at least one vertical bearing element, the at least one tensionable pulling element is guided in a direction away from the tarpaulin.

This configuration of the at least one redirecting device provides for a redirection of the at least one tensionable pulling element, wherein the pulling or tensioning forces when tensioning are distributed over the elements in question in efficient manner.

The at least one redirecting device is preferably arranged on the at least one vertical bearing element. The at least one redirecting device is more preferably arranged on the at least one vertical bearing element in height-adjustable manner, for instance slidably.

In this way different types of loading space can be transformed or adapted in rapid and efficient manner into a loading space which is suitable for transporting bulk goods or stackable goods. The at least one redirecting device can furthermore be arranged on the at least one vertical bearing element in removable manner. When the at least one redirecting device is height-adjustable, a loading space can be adapted to a determined type of bulk good or stackable good in rapid and efficient manner.

The at least one redirecting device preferably comprises at least one diverting element which is configured to be in contact with the at least one tensionable pulling element and to divert the at least one tensionable pulling element.

Diverting the at least one tensionable pulling element by means of contact ensures that the at least one tensionable pulling element is redirected in reliable manner.

The at least one diverting element further preferably comprises a rotatable roller.

Providing the at least one diverting element as a rotatable roller reduces friction between the at least one tensionable pulling element and the at least one diverting element. This is advantageous for the durability and/or wear-resistance of the tensioning system.

The at least one diverting element is further preferably displaceable relative to a fastening part of the redirecting device. Fastening part is understood to mean the part of the redirecting device with which the redirecting device is arranged on the at least one vertical bearing element. Displaceable is understood to mean rotatable, pivotable and/or collapsible such that the presence of the redirecting device does not affect a loading width of the loading space, or hardly so, when the tensioning system is not in use.

The at least one redirecting device preferably comprises a first and a second diverting element which are configured to be in contact with the at least one tensionable pulling element and to divert the at least one tensionable pulling element, such that the at least one tensionable pulling element is oriented along a first direction coming up to the first diverting element, along a second direction between the first and second diverting element, and along a third direction downstream of the second diverting element.

Providing a first and second diverting element in this manner provides for a redirection of the at least one tensionable pulling element, wherein the pulling or tensioning forces when tensioning are distributed over the elements in question in efficient manner. It will be apparent to the skilled person that one or more additional diverting elements can be provided.

The first direction is preferably oriented away from the tarpaulin.

The second direction is preferably oriented toward the tarpaulin.

The third direction is preferably substantially parallel to the tarpaulin.

It will be apparent to the skilled person that said preferred directions can be applied separately of each other, partially in combination with each other, or in combination with each other. In a preferred embodiment the first direction is oriented away from the tarpaulin, the second direction is oriented toward the tarpaulin and the third direction is substantially parallel to the tarpaulin. It will be apparent to the skilled person that one or more additional diverting elements can be provided, whereby the at least one tensionable pulling element can be diverted in respectively one or more additional directions.

A position of the first diverting element is preferably adjustable between at least a first position and a second position, wherein the distance between the first diverting element and the tarpaulin in the first position is smaller than the distance between the first diverting element and the tarpaulin in the second position.

In this way the degree of redirection or diversion of the at least one tensionable pulling element can be adjusted in order to adjust the exerted negative tension, if desired.

The at least one tensionable pulling element is preferably provided with one or more engaging elements, such as loops, rings, hooks and/or eyes.

The at least one tensionable pulling element is preferably manufactured from one piece of material. In this way no additional connecting pieces are necessary to tension substantially the whole length of the side wall. Owing to the absence of fragile intermediate pieces and/or interfaces therebetween, the material in one piece furthermore provides for more stability and durability of the tensioning system.

The at least one tensionable pulling element is preferably an at least partially flexible element, more preferably a pulling strap.

The at least one tensionable pulling element preferably comprises polyester fibres and/or fibres of a low-stretch material such as aramid.

Aramid fibres, for example, contribute to the durability and wear-resistance of the at least one tensionable pulling element. Polyester fibres contribute to the flexibility or stretchability of the at least one tensionable pulling element. It will be apparent to the skilled person that the at least one tensionable pulling element or pulling strap can comprise other similar materials, either as alternative or in addition to aramid and/or polyester.

The at least one tensionable pulling element is preferably at least partially integrated in the tarpaulin.

This achieves an increased connection between the at least one tensionable pulling element and the tarpaulin. It will be apparent to the skilled person that the tensionable pulling element can alternatively or additionally be located at least partially along the inner side of the tarpaulin.

Preferably, the tarpaulin is provided with vertical support elements and the at least one tensionable pulling element passes between the tarpaulin and the provided vertical support elements.

In this way the negative tension is transmitted to the tarpaulin and the provided vertical support elements in efficient manner when the at least one tensionable pulling element is tensioned. The vertical support elements can be dimensionally stable and for instance be formed by planks of aluminium and/or another material. In alternative manner the vertical support elements can be flexible and for instance be formed by vertical welding strips in the tarpaulin. It will be apparent to the skilled person that a combination of dimensionally stable and flexible vertical support elements is possible.

Preferably, the tarpaulin is provided with vertical support elements and the at least one tensionable pulling element is connected to the provided vertical support elements.

In this way the negative tension is transmitted to the tarpaulin and the provided vertical support elements in efficient manner when the at least one tensionable pulling element is tensioned. The vertical support elements can be dimensionally stable and for instance be formed by planks of aluminium and/or another material. In alternative manner the vertical support elements can be flexible and for instance be formed by vertical welding strips in the tarpaulin. It will be apparent to the skilled person that a combination of dimensionally stable and flexible vertical support elements is possible.

The above described aspect of the invention and the corresponding preferred embodiments relate mainly to a loading space, a side wall of which comprises a tarpaulin. It will however be apparent to the skilled person that similar aspects and preferred embodiments of the tensioning system apply, mutatis mutandis, to loading spaces with any other form of flexible side wall, such as substantially horizontal planks, substantially vertical planks, or combinations thereof. A negative pre-tension can be exerted on such flexible side walls in similar manner, wherein the flexible side wall is flexed or stretched inward, i.e. in the direction of the inner space of the loading space.

A further aspect of the invention relates to a trailer for a truck, at least one side wall of which is provided with a tensioning system as described above.

It will be apparent to the skilled person that the above described preferred embodiments and advantages in respect of the tensioning system apply similarly, mutatis mutandis, to embodiments of the trailer for a truck.

A further aspect of the invention relates to a freight car for a train, at least one side wall of which is provided with a tensioning system as described above.

It will be apparent to the skilled person that the above described preferred embodiments and advantages in respect of the tensioning system apply similarly, mutatis mutandis, to embodiments of the freight car for a train.

A further aspect of the invention relates to a redirecting device for use in a tensioning system as described above.

It will be apparent to the skilled person that the above described preferred embodiments and advantages in respect of the tensioning system apply similarly, mutatis mutandis, to embodiments of the redirecting device.

### Brief description of the figures

The above stated and other advantageous features and objects of the invention will become more apparent, and the invention better understood, on the basis of the following detailed description when read in combination with the accompanying drawings, in which:
Figure 1 is a trailer for a truck, two side walls of which are provided with a number of systems according to an embodiment of the invention;
Figure 2 is a close-up side view of a system according to an embodiment of the invention;
Figure 3 is a schematic top view of a loading space, two side walls of which are provided with a system according to an embodiment of the invention;
Figures 3A, 3B, 3C, 3D and 3E are schematic top views of different elements of a system according to embodiments of the invention;
Figures 4A, 4B, 4C and 4D are more detailed views of the embodiment as shown in figure 3A; and
Figures 5A, 5B, 5C and 5D are more detailed views of the embodiment as shown in figures 3B and 3C.

The same or similar elements are designated in the figures with the same reference numerals.

### Detailed embodiments

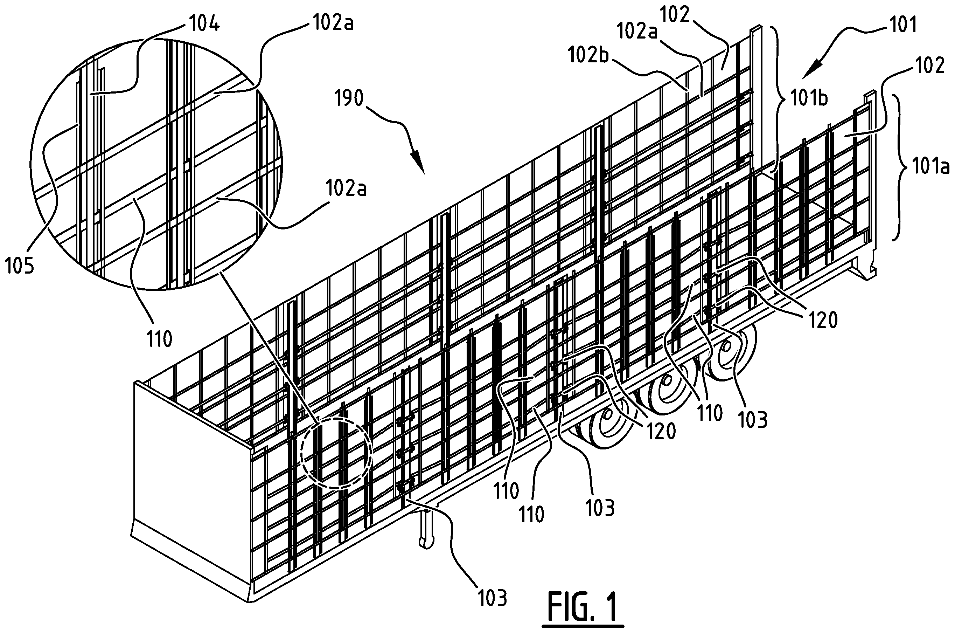

The invention relates to a tensioning system for a tarpaulin 102 which defines a side wall 101a, 101b of a loading space 101. The loading space 101 is preferably defined here by a load container, particularly a mobile load container. The mobile load container is shown in figure 1 as a trailer 190 of a truck. Such mobile load containers are typically used to transport goods. It will be apparent that the invention is not only applicable to trailers of trucks, but also to railway cars, trucks with fixedly constructed load container and further mobile load containers with loading spaces for transporting goods.

Such load containers typically have dimensions which are limited by law. In Belgium for instance an outer dimension with a maximum width of 2.55 m is thus imposed for a non-refrigerated load container of a truck. Partly for this reason it is important that, when transporting bulk goods, the side walls do not bulge outward, causing the outer dimension of the load container to increase. By means of the tensioning system according to embodiments of the invention a negative pre-tension can be exerted on one or both side walls and the outer dimensions of the load container are better controlled. These imposed maximum outer dimensions further affect the maximum loading space in the load container. In order to maximize this loading space the wall of the loading space is preferably formed on an outermost peripheral edge of the load container. Bearing and support elements with which the load container is constructed and which have a cross-section larger and thicker than the wall of the loading space are therefore preferably located inside this wall so that no part, or only a small part, of these elements protrudes outside the wall. The outer dimensions are in this way defined substantially by the wall of the loading space, this maximizing the room available in the loading space.

The wall is therefor preferably formed by a tarpaulin 102. A tarpaulin 102 typically has a small thickness and will therefore be suitable as wall of a load container 190 for closing a loading space 101 since it takes up little loading space 101. A tarpaulin 102 further has the advantage that it is flexible and, provided it is attached via a suitable suspension system, can be pushed away to one side.

Figure 1 shows a trailer 190 with a loading space 101 which is partially bounded by side walls 101a, 101b, wherein each of the side walls is formed by a tarpaulin 102. Vertical bearing elements 103 are provided in the loading space for the structural stability of trailer 190. The vertical bearing elements 103 are located relative to tarpaulin 102 on the side thereof facing toward the loading space 101. Figure 1 shows for each of the side walls 101a 101b three vertical bearing elements 103, although it will be apparent that more or fewer (at least one per side wall 101a, 101b) vertical bearing elements 103 can be provided depending on the dimensions of the trailer 190 or loading space 101. The vertical bearing elements 103 are positioned fixedly in trailer 190, preferably at least on the bottom of loading space 101 or on a horizontal support element of loading space 101. For the strength of tarpaulin 102, the tarpaulin 102 at side wall 101a is in the shown embodiment provided with vertical support elements 104. These vertical support elements 104 are optional. A tarpaulin without vertical support elements 104 is for instance shown at side wall 101a. It will further be apparent that the number of support elements 104 provided can vary depending on for instance the length of loading space 101. Tarpaulin 102 is further represented by means of horizontal strips 102a and vertical strips 102b. In the shown embodiment the vertical support elements 104 are provided with a corresponding vertical shielding element 105 which extends over the vertical support elements 104 on an inner side thereof remote from tarpaulin 102. On one hand, the vertical shielding elements 105 serve to protect the vertical support elements 104, and on the other they prevent (bulk) goods present in loading space 101 from becoming damaged during transport.

Each side wall 101a, 101b is provided with three tensioning systems according to embodiments of the invention. Each of the shown tensioning systems comprises a tensionable pulling element 110 which extends from a rear side of the respective side wall 101a, 101b to the front side of the respective side wall 101a, 101b and a number of redirecting devices 120. It will be apparent that such a tensioning system inevitably comprises one redirecting device 120 and that the number of redirecting devices 120 provided can be determined depending on for instance the length of loading space 101 or side wall 101a, 101b. The number of provided redirecting devices 120 in figure 1 is therefore purely illustrative and should not be interpreted as being limitative for the invention. The redirecting devices 120 ensure that the tensionable pulling element 110, which extends substantially in a straight line parallel to the tarpaulin and preferably also to the bottom of loading space 101, are redirected in the vicinity of the vertical bearing elements 103. More specifically, the redirecting devices 120 are configured to make the tensionable pulling element 110 deviate from the substantially straight line so that the tensionable pulling element 110 passes between the vertical bearing elements 103 and tarpaulin 102. The redirection, and the corresponding deviation from the straight line, is such that a negative pre-tension is exerted on tarpaulin 102, i.e. in the direction of loading space 101, when tensionable pulling element 110 is tensioned. When the tensionable pulling element 110 is tensioned, the tensionable pulling element 110 engages on tarpaulin 102 and urges it inward. In the shown embodiment this engagement is enhanced at side wall 101a by the presence of the vertical support elements 104, wherein the tensionable pulling element 110 is provided between the vertical support elements and the tarpaulin 102. It will however be apparent that such engagement can also be brought about in other ways, for instance by connecting the tensionable pulling element 110 at least partially to tarpaulin 102 and/or integrating the tensionable pulling element 110 at least partially in tarpaulin 102, and so on.

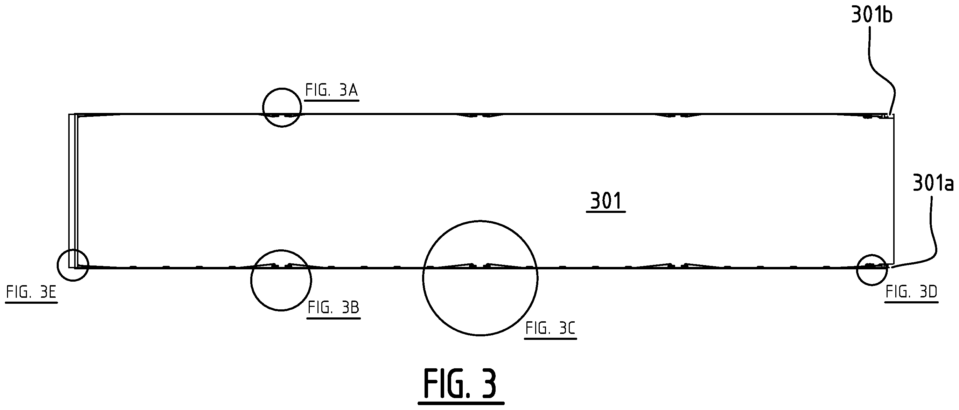

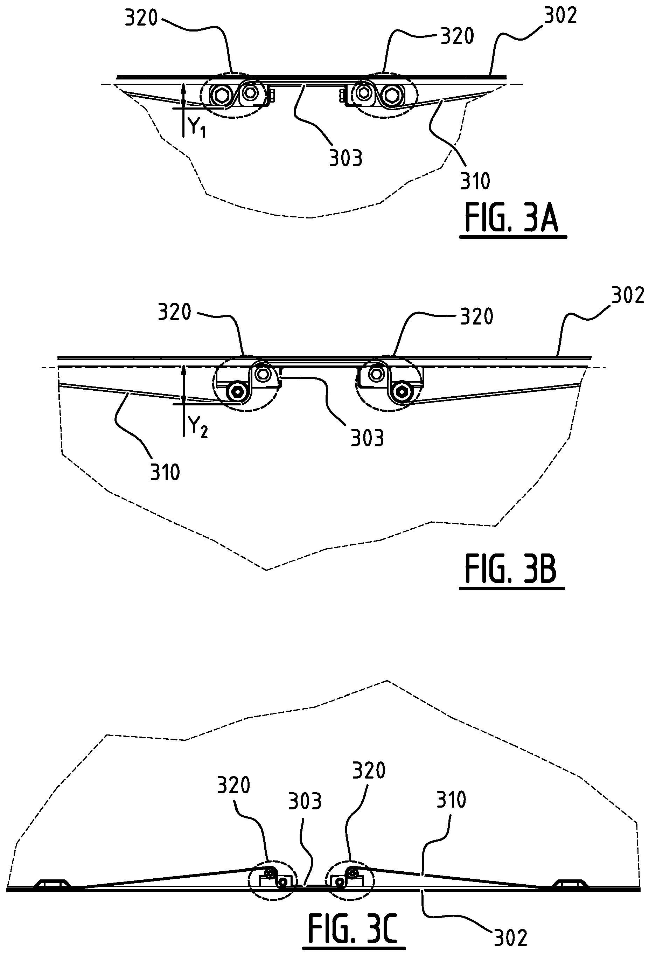

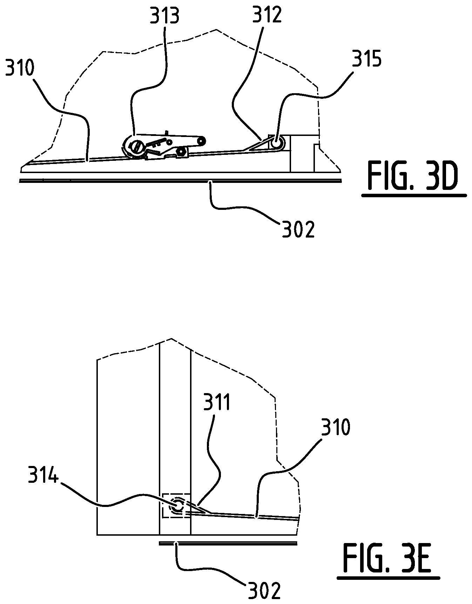

The tensionable pulling element 110 is arranged, preferably in removable manner, with a first outer end thereof at a rear side of the corresponding side wall 101a, 101b and with a second outer end thereof at a front side of the corresponding side wall 101a, 101b. The tensionable pulling element 110 is further provided with a tensioning means which is configured to tension the tensionable pulling element 110. This will be elucidated in more detail with reference to figures 3, 3D and 3E. In figure 1 each of the side walls 101a, 101b is provided with three tensioning systems which are located at a distance from each other as seen in the direction of the vertical bearing elements 103. It will be apparent that the presence of one tensioning system is necessary to create a negative pre-tension on a side wall 101a, 101b, and that two or more tensioning systems can be provided in advantageous manner depending on for instance the nature of the (bulk) goods to be transported. The tensionable pulling element 110 preferably has one pulling line consisting of one or more parts. An example of a pulling line consisting of one part is a pulling strap. An example of a pulling line consisting of a plurality of parts is a chain which consists of a plurality of mutually connected links. The tensionable pulling element 110 is preferably manufactured from one piece of material per tensioning system. A suitable tensionable pulling element 110 is for instance a pulling strap or tensioning strap, preferably consisting of aramid and/or polyester. In the context of this description a tensioning strap or pulling strap is defined as a ribbon-like structure which preferably forms a flat, elongate auxiliary means. A tensioning strap is usually woven and occasionally knitted. Materials of the threads, thickness of the threads, numbers of threads, thickness of the ribbon itself, number of layers of fabric, ... can all differ. Reinforcing threads of for instance steel, glass fibre, kevlar, aramid or other material are preferably incorporated. A tensioning strap is typically used to secure load during transport of goods. The tensioning strap according to the invention is preferably made such that the stretch is minimal when loaded. This can be done by using rigid fibres, by weaving tightly, by using thicker fabrics. This can also be realized by working said reinforcing threads into the tensioning strap.

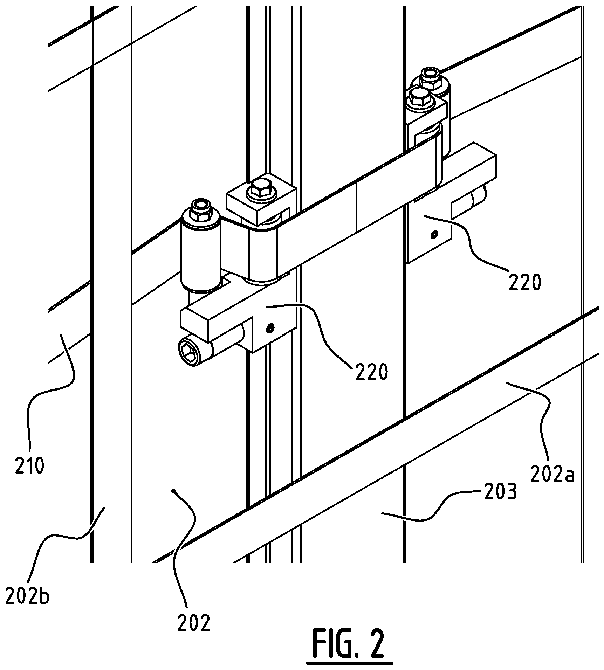

Figure 2 shows a close-up of a vertical bearing element 203 of figure 1, wherein the tensionable pulling element 210 is redirected at the position of a vertical bearing element 203 by means of two redirecting devices 220 arranged on the vertical bearing element 203. The portion of the tensionable pulling element 210 that extends from the one redirecting device 220 to the other redirecting device is here located between the vertical bearing element 203 and the tarpaulin 202, which is represented here by means of horizontal strips 202a and vertical strips 202b.

Figure 3 shows a schematic top view of the loading space 301 of figure 1. Side wall 301a is provided with a tensioning system as described with reference to figure 1. Specific elements or configurations B, C, D and E of the tensioning system are shown in more detail in respective figures 3B, 3C, 3D and 3E. Side wall 301b is provided with a tensioning system as described with reference to figure 1. Element or configuration A of the tensioning system is shown in more detail in figure 3A. The elements or configurations shown in figures 3A, 3B, 3C, 3D and 3E each represent preferred embodiments of components of a tensioning system according to the invention. It will be apparent that the specific shown combination serves only by way of illustration and that each of the shown elements or configurations can be applied individually or in any combination in a tensioning system according to the invention.

As shown in figure 3E, the tensionable pulling element 310 is removably arranged or immobilized at a rear side of side wall 101a. In the shown embodiment the tensionable pulling element 310 is provided at the rear outer end thereof with a loop 311 which can engage on or be connected to a rear engaging element 314. The rear engaging element 314 is preferably provided on a vertical bearing element or support beam at the rear side of the loading space 301.

As shown in figure 3D, the tensionable pulling element 310 is removably arranged or immobilized at a front side of side wall 101a. In the shown embodiment the tensionable pulling element 310 is provided at the front outer end thereof with a loop 312 which can engage on or be connected to a front engaging element 315. The front engaging element 315 is preferably provided on a vertical bearing element or support beam at the front side of the loading space 301. The tensionable pulling element 110 is further provided with a tensioning means 313 which is configured to tension the tensionable pulling element 310. In the shown embodiment tensioning means 313 is provided in the vicinity of the front end of the tensionable pulling element 310. It will however be apparent that tensioning means 313 can also be provided in the vicinity of the rear end of the tensionable pulling element 310, or anywhere between the front and rear end of the tensionable pulling element 310.

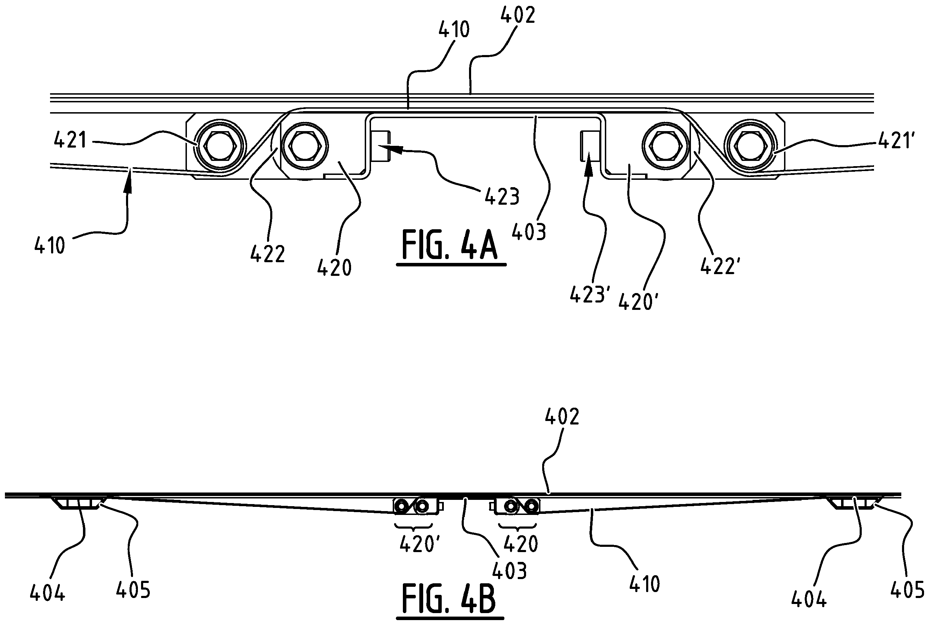

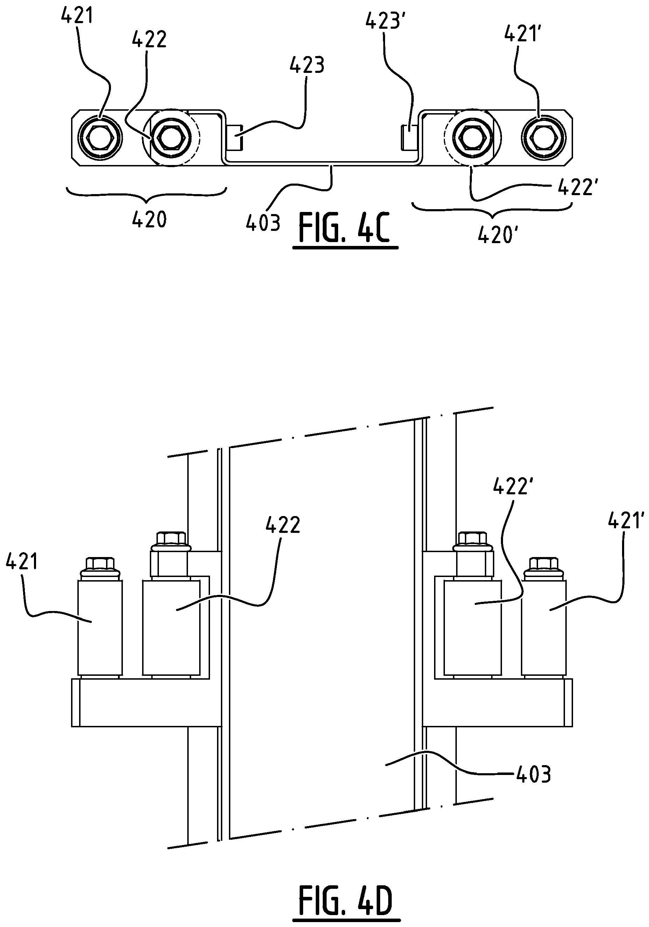

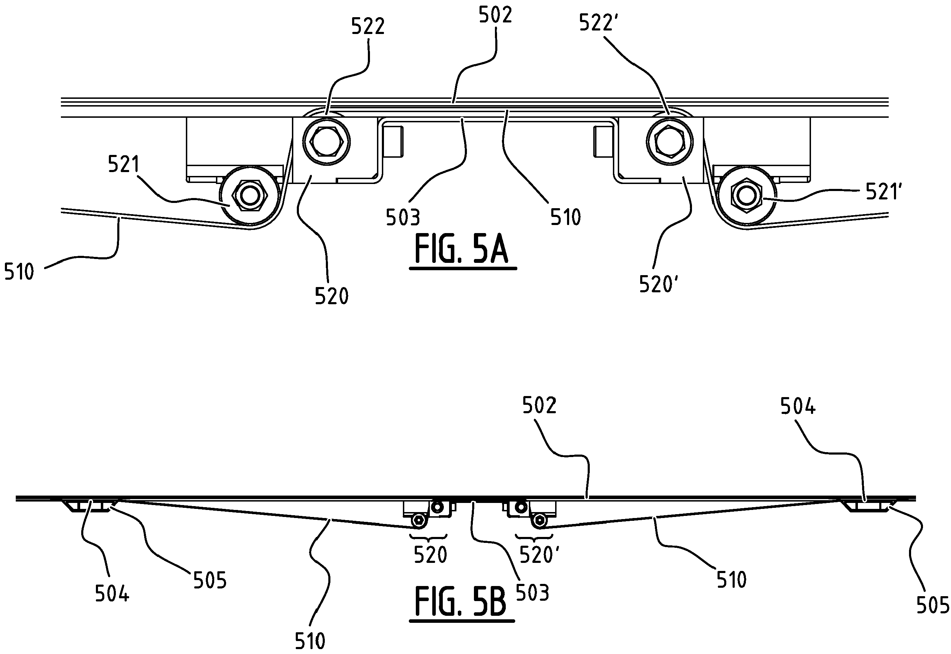

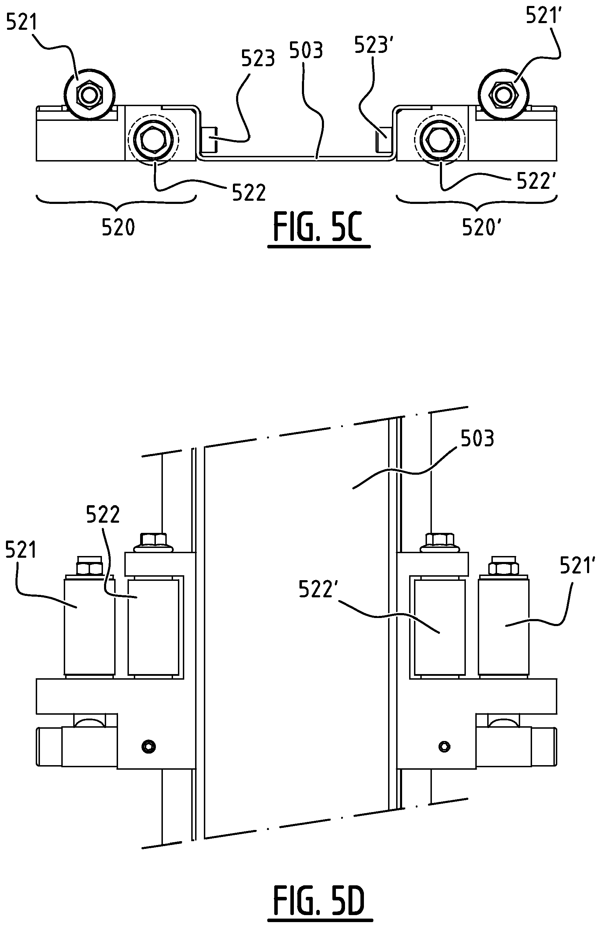

Figures 3A, 3B and 3C each show embodiments wherein the tensionable pulling element 310 is redirected at the position of a vertical bearing element 303 by means of two redirecting devices 320 arranged on the vertical bearing element 303. The portion of the tensionable pulling element 310 that extends from the one redirecting device 320 to the other redirecting device 320 is here located between the vertical bearing element 303 and the tarpaulin 302. Redirecting device 320 is configured to redirect the tensionable pulling element 310 such that, coming up to the vertical bearing element 303, the tensionable pulling element 310 is guided in a direction away from tarpaulin 304. The difference between the embodiment according to figure 3A on one hand and the embodiments according to figures 3B and 3C on the other is mainly in the degree of redirection and the corresponding configuration of the redirecting devices 320. This is shown in more detail in figures 4A, 4B, 4C and 4D on one hand, these showing more detailed views of the embodiment as shown in figure 3A, and in figures 5A, 5B, 5C and 5D on the other, these showing more detailed views of the embodiments as shown in figures 3B and 3C.

Figures 4A, 4B, 4C and 4D show the tensionable pulling element 410 at the position of a vertical bearing element 403 redirected by means of two redirecting devices 420, 420' arranged on the vertical bearing element 403. In the shown embodiment the redirecting devices 420, 420' are arranged removably on the vertical bearing element 403 by means of respective fastening means 423, 423'. The portion of the tensionable pulling element 410 that extends from the one redirecting device 420 to the other redirecting device 420' is located between the vertical bearing element 403 and the tarpaulin 402. The redirecting devices 420, 420' each have a first 421, 421' and a second diverting element 422, 422' which are configured to be in contact with the tensionable pulling element 410 and to divert the at least one tensionable pulling element 410. In respect of the redirecting device 420 the tensionable coupling element 410 is oriented along a first direction coming up to the first diverting element 421, along a second direction between the first 421 and second diverting element 422, and along a third direction downstream of the second diverting element 422, i.e. between the vertical bearing element 403 and the tarpaulin 402. The first direction is oriented away from the tarpaulin, the second direction is oriented toward the tarpaulin and the third direction is substantially parallel to the tarpaulin. The shown diverting elements 421, 422, 421', 422' are formed as rotatable roller. The at least one diverting element is preferably displaceable relative to a fastening part of the redirecting device. Fastening part is understood to mean the part of the redirecting device with which the redirecting device is arranged on the at least one vertical bearing element. Displaceable is understood to mean rotatable, pivotable and/or collapsible such that the presence of the redirecting device does not affect a loading width of the loading space, or hardly so, when the tensioning system is not in use.

Figures 5A, 5B, 5C and 5D show the tensionable pulling element 510 at the position of a vertical bearing element 503 redirected by means of two redirecting devices 520, 520' arranged on the vertical bearing element 503. In the shown embodiment the redirecting devices 520, 520' are arranged removably on the vertical bearing element 503 by means of respective fastening means 523, 523'. The portion of the tensionable pulling element 510 that extends from the one redirecting device 520 to the other redirecting device 520' is here located between the vertical bearing element 503 and the tarpaulin 502. The redirecting devices 520, 520' each have a first 521, 521' and a second diverting element 522, 522' which are configured to be in contact with the tensionable pulling element 510 and to divert the at least one tensionable pulling element 510. In respect of the redirecting device 520 the tensionable coupling element 510 is oriented along a first direction coming up to the first diverting element 521, along a second direction between the first 521 and second diverting element 522, and along a third direction downstream of the second diverting element 522, i.e. between the vertical bearing element 503 and the tarpaulin 502. The first direction is oriented away from the tarpaulin, the second direction is oriented toward the tarpaulin and the third direction is substantially parallel to the tarpaulin. The shown diverting elements 521, 522, 521', 522' are formed as rotatable roller. The main difference with the embodiment according to figures 4A, 4B, 4C and 4D is that the distance between the first diverting element 521, 521' and the tarpaulin 502 is greater than the distance between the first diverting element 421, 421' and the tarpaulin 402. A greater tensioning force can hereby be exerted on tarpaulin 502 than on tarpaulin 402. In a preferred embodiment the position of the first diverting element is adjustable between a first position and a second position, wherein the distance between the first diverting element and the tarpaulin in the first position is smaller than the distance between the first diverting element and the tarpaulin in the second position, for instance between the positions as shown in figure 4A (first position) and figure 5A (second position). Alternatively or additionally, the at least one diverting element is preferably displaceable relative to a fastening part of the redirecting device. Fastening part is understood to mean the part of the redirecting device with which the redirecting device is arranged on the at least one vertical bearing element. Displaceable is understood to mean rotatable, pivotable and/or collapsible such that the presence of the redirecting device does not affect a loading width of the loading space, or hardly so, when the tensioning system is not in use. This is particularly advantageous when loading the loading space from the back, i.e. via rear doors.

The skilled person will further appreciate that the invention is not limited to the above described embodiments and that many modifications and variants are possible within the scope of the invention, which is defined solely by the following claims.

## Claims

1. Tensioning system for a tarpaulin which defines a side wall of a loading space, wherein the tarpaulin extends along at least one vertical bearing element of the loading space, the tensioning system comprising:
- at least one tensionable pulling element which extends over substantially the whole length of the side wall along an inner side of the tarpaulin;
- at least one redirecting device which is configured to redirect the at least one tensionable pulling element such that, at the position of the at least one vertical bearing element, the at least one tensionable pulling element passes between the at least one vertical bearing element and the tarpaulin; and
wherein, when the at least one tensionable pulling element is tensioned, the tensioning system exerts a negative pre-tension on the tarpaulin.

2. Tensioning system according to claim 1, wherein the at least one tensionable pulling element extends in a straight line over substantially the whole length of the side wall, except in the vicinity of the at least one vertical bearing element.

3. Tensioning system according to claim 1 or 2, wherein the at least one redirecting device is configured to redirect the at least one tensionable pulling element such that, coming up to the at least one vertical bearing element, the at least one tensionable pulling element is guided in a direction away from the tarpaulin.

4. Tensioning system according to any one of the foregoing claims, wherein the at least one redirecting device is arranged on the at least one vertical bearing element, preferably wherein the at least one redirecting device is height-adjustable.

5. Tensioning system according to any one of the foregoing claims, wherein the at least one redirecting device comprises at least one diverting element which is configured to be in contact with the at least one tensionable pulling element and to divert the at least one tensionable pulling element, wherein the at least one diverting element preferably comprises a rotatable roller.

6. Tensioning system according to the foregoing claim, wherein the at least one redirecting device comprises a first and a second diverting element which are configured to be in contact with the at least one tensionable pulling element and to divert the at least one tensionable pulling element, such that the at least one tensionable pulling element is oriented along a first direction coming up to the first diverting element, along a second direction between the first and second diverting element, and along a third direction downstream of the second diverting element.

7. Tensioning system according to the foregoing claim, wherein the first direction is oriented away from the tarpaulin; and/or
wherein the second direction is oriented toward the tarpaulin; and/or
wherein the third direction is substantially parallel to the tarpaulin.

8. Tensioning system according to any one of the foregoing claims 6-7, wherein a position of the first diverting element is adjustable between at least a first position and a second position, wherein the distance between the first diverting element and the tarpaulin in the first position is smaller than the distance between the first diverting element and the tarpaulin in the second position.

9. Tensioning system according to any one of the foregoing claims, wherein the at least one tensionable pulling element is provided with one or more engaging elements.

10. Tensioning system according to any one of the foregoing claims, wherein the at least one tensionable pulling element is manufactured from one piece of material.

11. Tensioning system according to any one of the foregoing claims, wherein the at least one tensionable pulling element is an at least partially flexible element, preferably a pulling strap; and/or
wherein the at least one tensionable pulling element comprises polyester; and/or
wherein the at least one tensionable pulling element comprises a low-stretch material such as aramid.

12. Tensioning system according to any one of the foregoing claims, wherein the at least one tensionable pulling element is at least partially integrated in the tarpaulin.

13. Tensioning system according to any one of the foregoing claims, wherein the tarpaulin is provided with vertical support elements, and wherein the at least one tensionable pulling element passes between the tarpaulin and the provided vertical support elements.

14. Tensioning system according to any one of the foregoing claims, wherein the tarpaulin is provided with vertical support elements, and wherein the at least one tensionable pulling element is connected to the provided vertical support elements.

15. Trailer for a truck or freight car for a train, at least one side wall of which is provided with a tensioning system according to any one of the foregoing claims.
